(19) Europäisches Patentamt
European Patent Office
Office européen des brevets

(11) **EP 1 124 109 B1**

(12) **EUROPÄISCHE PATENTSCHRIFT**

(45) Veröffentlichungstag und Bekanntmachung des Hinweises auf die Patenterteilung:
**23.12.2009 Patentblatt 2009/52**

(51) Int Cl.:
*G01B 7/16* (2006.01)    *B60T 8/00* (2006.01)
*G01M 17/02* (2006.01)

(21) Anmeldenummer: **01102646.5**

(22) Anmeldetag: **07.02.2001**

(54) **Einrichtung zur Ermittlung der wirksamen Umfangs- und Normalkraft an einem Reifen eines Fahrzeuges**

Device to determine the effective peripheral and normal force on a tire of a vehicle

Dispositif pour déterminer la force tangentielle et normale sur un pneu de véhicule

(84) Benannte Vertragsstaaten:
**DE FR GB IT**

(30) Priorität: **09.02.2000 DE 10005552**

(43) Veröffentlichungstag der Anmeldung:
**16.08.2001 Patentblatt 2001/33**

(73) Patentinhaber: **ROBERT BOSCH GMBH**
**70442 Stuttgart (DE)**

(72) Erfinder:
• **Liebemann, Edwin**
**71229 Leonberg (DE)**
• **Arndt, Dietmar**
**71706 Markgroeningen (DE)**

(56) Entgegenhaltungen:
**DE-A- 4 435 160    DE-A- 19 620 581**

**Beschreibung**

Die Erfindung betrifft eine Einrichtung zur Ermittlung einer wirksamen Kraft an einem Reifen eines Fahrzeuges nach der Gattung des Hauptanspruches.

Stand der Technik

Aus DE 44 35 161 A1 ist ein Seitenwandtorsionssensor bekannt, der in die Seitenwand eines Reifens integriert ist und dessen Funktion auf elastischen Verformungen des Reifens beim Übertragen von Kräften beruht. So wird der Reifen eines Fahrzeuges bei einer Antriebs- oder Bremskraft in Fahrtrichtung in sich tordiert, was gleichzeitig mit einer Spannung in dem Reifen verbunden ist. Darüber hinaus ist aus der genannten Schrift bereits bekannt, auch eine Kraft, die quer zum Fahrzeug bzw. dessen Fahrtrichtung gerichtet ist, durch in die Reifenseitenwand integrierte Geberelemente zu bestimmen.

Der eingesetzte Magnetfeldsensor ist gemäß DE 44 35 161 A1 in Form eines Magnetfeldsensorpaares ausgebildet, wobei ein Sensor achsnah, der andere achsfern angebracht ist. Aus dem Phasenversatz der von diesen beiden Sensoren detektierten Signale kann somit auf die bei einer wirksamen Umfangskraft auftretende Torsion des Reifens geschlossen werden.

Zur Messung einer Kraft quer zum Fahrzeug kann weiter zusätzlich die Amplitude des Magnetfeldsignals herangezogen werden, da sich der Reifen bei Auftreten einer solchen Kraft auch quer zur Fahrzeugrichtung tordiert, so dass die Amplitude des von dem Magnetfeldsensor detektierten Signals nahezu exponentiell mit dem Abstand des Sensorelementes von dem zugehörigen Magnetisierungsstreifen bzw. dem zugehörigen Geberelement abfällt.

In Weiterführung von DE 44 35 161 A1 wird in DE 196 46 251 A1 zudem bereits vorgeschlagen, die fahrzeugseitige Seitenwand des Reifens eines Fahrzeuges mit Geberelementen in Form von Magnetisierungsstreifen bzw. Magnetisierungssegmenten zu versehen, die gleichmäßig über den gesamten Umfang des Reifens verteilt sind und als ABS- oder Seitenwandtorsionsgeber einsetzbar sind. Die Magnetisierungssegmente werden dazu durch Einbringen von hartmagnetischen Partikeln in die Seitenflanke des Reifens derart strukturiert erzeugt, dass die Seitenflanke in maschinell detektierbarer Weise magnetisiert ist, und dass gleichzeitig die Magnetisierung radwinkelabhängig unterschiedliche Intensität und/oder Polung aufweist.

Weiter ist auch bereits bekannt, ca. 20 der in der DE 196 46 251 A1 vorgeschlagenen Magnetisierungsstreifen mit einer Feldamplitude von einigen mT und einem Abstand von etwa 10 mm derart auszubilden und über die Seitenwandfläche des Reifens zu verteilen, dass die Magnetfeldamplitude bei Rotation des Rades an einer vorgegebenen festen Position der Sensorelemente sinusartig variiert. Diese sinusartige Variation des Magnetfeldes kann dann mit Hilfe eines Magnetfeldsensors in Form einer Hall-Sonde in eine elektrische Spannung umgesetzt werden, die typischerweise ca. 100 mV beträgt.

Vorteile der Erfindung

Die erfindungsgemäße Einrichtung zur Ermittlung einer zu einer wirksamen Kraft proportionalen Größe an einem Reifen eines Fahrzeuges hat gegenüber dem Stand der Technik den Vorteil, dass damit nicht nur eine wirksame Umfangskraft an dem Fahrzeugreifen, d.h. eine in Fahrtrichtungen oder Gegenfahrtrichtung wirkende Kraft (x-Richtung), und eine in Achsrichtung wirksame Kraft (y-Richtung) ermittelt werden kann, sondern gleichzeitig jederzeit auch die wirksame Aufstands- oder Normalkraft (z-Richtung) bestimmbar ist. Somit ist es mit der erfindungsgemäßen Einrichtung möglich, alle drei Komponenten der an dem Reifen als Funktion der Zeit wirkenden Kräfte zu ermitteln.

Vorteilhafte Weiterbildungen der Erfindung ergeben sich aus den in den abhängigen Ansprüchen genannten Maßnahmen.

So erlaubt es eine Weiterbildung der erfindungsgemäßen Einrichtung nunmehr, stets auch die Fahrtrichtung des Fahrzeuges eindeutig zu erkennen, so dass Mehrdeutigkeiten bei der Bestimmung der auf den Reifen einwirkenden Kraft, insbesondere hinsichtlich der gerade auf den Reifen wirksamen Umfangskraft, ausgeschlossen sind.

Darüber hinaus hat diese Weiterbildung den Vorteil, dass sie auch dann eine hohe Empfindlichkeit und Messgenauigkeit aufweist, wenn sich ein Außensensorelement und das zugehörige, radial weiter innen liegende Innensensorelement gerade in einem Magnetfeldmaximum bzw. einem Magnetisierungsmaximum befinden.

Auf diese Weise wird der der Lehre gemäß DE 44 35 160 A1 anhaftende Nachteil überwunden, dass dort nur dann eine gute Auflösung bzw. Messgenauigkeit gegeben ist, wenn sich die beiden zusammenwirkenden Sensorelemente (Außensensor/Innensensor) gerade im Bereich eines Magnetfeldnulldurchganges bzw. eines Magnetisierungsnulldurchganges, hervorgerufen durch eine entsprechende, den Sensorelementen gerade gegenüber befindliche Strukturierung der Geberelemente, befinden.

Schließlich ist es vorteilhaft, dass mit der erfindungsgemäßen Einrichtung sowohl die Amplitude einer Magnetisierung bzw. eines Magnetfeldes bestimmt werden kann, als auch eindeutig die Phasen bzw. Phasenverschiebungen der Signale der einzelnen Sensorelemente in der Sensiereinrichtung, wie sie insbesondere bei einer auf den Reifen einwirkenden Umfangskraft auftreten. Insbesondere ist die Genauigkeit dieser Phasenbestimmungen nun auch nicht mehr von der aktuellen Winkelposition des Fahrzeugrades abhängig, sondern über dessen gesamten Umfang hin konstant. Somit lassen sich nun die auf den Reifen einwirkenden Kräfte auch bei geringen Fahrzeuggeschwindigkeiten bzw. Raddrehzahlen zuverlässig bestimmen, da man nicht mehr nur auf die Detektion von Nulldurchgängen angewiesen ist.

Zeichnungen

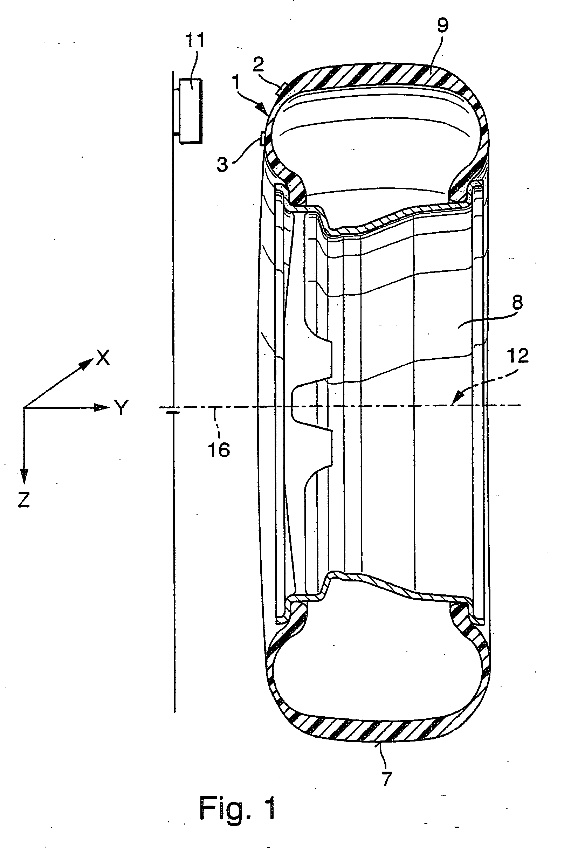

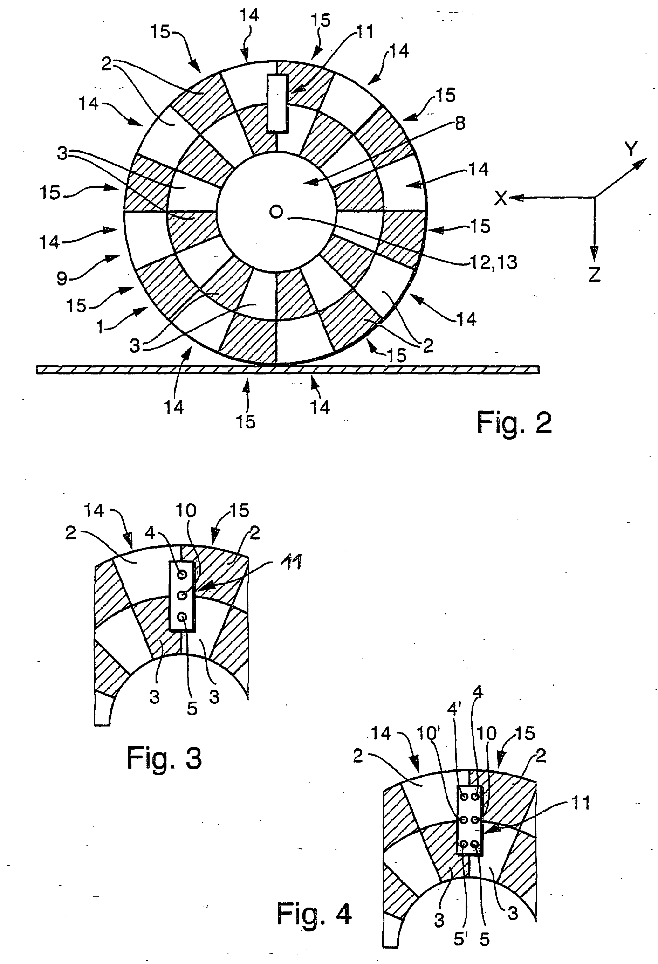

Die Erfindung wird anhand der Zeichnung und in der nachfolgenden Beschreibung näher erläutert. Es zeigt Figur 1 eine Prinzipskizze eines Fahrzeugreifens, der mit einem Fahrzeug verbunden ist, Figur 2 eine Seitenansicht der Innenseitenfläche des Reifens gemäß Figur 1 mit einer Sensiereinrichtung, Figur 3 einen Ausschnitt aus Figur 2 mit einer Sensiereinrichtung mit drei darin integrierten Sensorelementen und Figur 4 einen Ausschnitt aus Figur 2 mit einer zu Figur 3 alternativen Ausführung der Sensiereinrichtung mit sechs darin integrierten Sensorelementen.

Ausführungsbeispiele

Die Figur 1 zeigt einen Reifen 9 auf einer Felge 8, wie er in ähnlicher Form bereits aus DE 44 35 160 A1 und in Weiterführung dazu aus DE 196 46 251 A1 bekannt ist.

Der Reifen 9 weist zunächst eine Lauffläche 7 auf und ist mit einer Achse 16, die eine Achsrichtung 12 definiert, mit einem nicht dargestellten Fahrzeug verbunden. Weiter befinden sich auf der dem Fahrzeug zugewandten Reifenseitenfläche 1 eine äußere Geberstrukturierung 2 und eine weitere, gegenüber der äußeren Geberstrukturierung 2 radial weiter innen liegende innere Geberstrukturierung 3. Gegenüber den Geberstrukturierungen 2, 3 ist eine mit den Geberstrukturierungen 2, 3 zusammenwirkende Sensiereinrichtung 11 angeordnet, die zur Abgabe von elektronischen Signalen an eine nicht dargestellte Steuereinheit vorgesehen ist. In Figur 1 ist weiter angedeutet, dass die Achsrichtung 12 parallel der y-Richtung und die Fahrtrichtung parallel der x-Richtung verläuft. Eine auf den Reifen 9 einwirkende Aufstands- oder Normalkraft ist vertikal, d.h. parallel zu der z-Richtung, orientiert.

Die Figur 2 zeigt eine Seitenansicht der Figur 1, wobei die Innenseite der Reifenseitenfläche 1 sichtbar ist. Dabei sei betont, dass Figur 2 lediglich eine schematische Darstellung des Reifens 9 auf der Felge 8 in unbelastetem Zustand, d.h. ohne eine wirkende Aufstands- oder Normalkraft, ist, wobei zur besseren Darstellung die Felge 8 unverhältnismäßig klein und die Reifenseitenfläche 1 unverhältnismäßig groß gezeichnet ist. Im unbelasteten Zustand des Reifens 9 fällt die Achsrichtung 12 mit dem Reifenmittelpunkt 13 zusammen. Zudem ist in Figur 2 die mit dem Fahrzeug fest verbundene Sensiereinrichtung 11 gemäß Figur 1 in rückseitiger Draufsicht dargestellt.

Im Einzelnen ist gemäß Figur 2 die Reifenseitenfläche 1 mit strahlenförmigen oder kreissegmentförmigen, von dem Reifenmittelpunkt 13 des Reifens 9 ausgehenden bzw. auf diesen hin orientierten Magnetisierungsegmenten 14, 15 versehen. Diese Magnetisierungssegmente 14, 15 können beispielsweise, wie aus DE 196 46 251 A1 bekannt, in Form von in den Reifengummi der Reifenseitenfläche 1 eingebrachten magnetisierbaren hartmagnetischen Materialien erzeugt werden. In Figur 2 sind insgesamt zweiunddreißig derartige Magnetisierungsegmente 14, 15 auf dem gesamten Umfang der Reifenseitenfläche 1 unmittelbar aneinander angrenzend angeordnet, wobei diese Magnetisierungssegmente 14, 15 sich, entsprechend der angedeuteten Färbung der einzelnen Segmente in Figur 2, in der Richtung der zugehörigen Magnetisierung unterscheiden.

Konkret bilden die Magnetisierungssegmente 14, 15 gemäß Figur 2 auf der Reifenseitenfläche 1 zwei konzentrisch zueinander verlaufende Kreise von aneinander angrenzenden Magnetisierungssegmenten 14, 15, die auf den Reifenmittelpunkt 13 hin ausgerichtet sind. Der äußere dieser beiden von den Magnetisierungssegmenten 14, 15 gebildeten Kreise bildet dabei die äußere Geberstrukturierung 2, der innere der beiden durch die Magnetisierungssegmente 14, 15 gebildete Kreis die innere Geberstrukturierung 3. Insofern ist die äußere und die innere Geberstrukturierung 2, 3 jeweils eine strukturierte Magnetisierung der Reifenseitenfläche 1 in Form einer auf der Reifenseitenfläche 1 umlaufenden periodischen Anordnung der Magnetisierungssegmente 14, 15.

Die der inneren Geberstrukturierung 2 bzw. der äußeren Geberstrukturierung 3 zugeordneten Magnetisierungssegmente 14, 15 sind weiter jeweils derart magnetisiert, dass die Magnetisierung der Geberstrukturierung 2 bzw. 3 entlang zumindest einer konzentrisch zu dem Reifenmittelpunkt 13 auf der Reifenseitenfläche 1 im Bereich der inneren Geberstrukturierung 3 bzw. im Bereich der äußeren Geberstrukturierung 2 verlaufenden Kreislinie jeweils zumindest näherungsweise sinusförmig variiert.

Darüber hinaus weist die Magnetisierung eines der äußeren Geberstrukturierung 2 zugeordneten Magnetisierungssegmentes 14, 15 gegenüber einem radial weiter innen liegenden, der Geberstrukturierung 3 zugeordneten Magnetisierungssegment 14, 15 gemäß Figur 2 jeweils eine Phasenverschiebung von 180° auf, d.h. die Magnetisierungen dieser beiden Magnetisierungssegmente sind entgegengerichtet. Auf diese Weise ergibt sich auf der Reifenseitenfläche 1 zumindest bereichsweise eine hinsichtlich der Richtung der Magnetisierung benachbarter Magnetisierungssegmente 14, 15 schachbrettähnliche Anordnung von umlaufenden Magnetisierungssegmenten 14, 15.

Die Figur 3 zeigt einen Ausschnitt aus Figur 2 im Bereich der Sensiereinrichtung 11, die erneut in rückseitiger Draufsicht dargestellt ist, wobei zur Erläuterung zusätzlich die darin befindlichen bzw. in die Sensiereinrichtung 11 integrierten Sensorelemente 4, 5 und 10 sowie deren Anordnung in der Sensiereinrichtung 11 in vereinfachter Darstellung punktförmig eingezeichnet sind.

Im Einzelnen weist die Sensiereinrichtung 11 ein erstes Außensensorelement 4, ein radial weiter innen liegendes erstes Mittensensorelement 10, und ein, gegenüber dem ersten Mittensensorelement 10 radial weiter innen liegendes erstes Innensensorelement 5 auf. Die Sensorelemente 4, 5, 10 sind im konkreten Beispiel als an sich bekannte Hall-Sensorelemente ausgebildet. Weiter ist das erste Außensensorelement 4, das erste Mittensensorelement 10 und das erste Innensensorelement 5 auf einem senkrecht zu der Achsrichtung 12 verlaufenden, von der Achse 16 ausgehenden Strahl angeordnet, der zumindest näherungsweise parallel zu der an dem Reifen 9 angreifenden Aufstands- oder Normalkraft verläuft. Bevorzugt befindet sich die Sensiereinrichtung 11 senkrecht oberhalb der Achsrichtung 12 gegenüber der Reifenseitenfläche 1 wie in Figur 1 angedeutet.

Das erste Mittensensorelement 10 gemäß Figur 3 ist weiter derart angeordnet, dass bei einem von dem Einfluss einer Aufstands- oder Normalkraft freien Reifen 9 das effektive Magnetfeld am Ort des ersten Mittensensorelementes 10 zumindest näherungsweise null ist. Auf diese Weise wird erreicht, dass das erste Mittensensorelement 10 bei einem von dem Einfluss einer Aufstands- oder Normalkraft freien Reifen 9 als Funktion der Zeit bei Drehung des Reifens 9 zumindest näherungsweise kein Signal abgibt bzw. dieses Signal zeitlich zumindest näherungsweise konstant ist. Um dies zu erreichen wird das erste Mittensensorelement 10 zweckmäßigerweise mittig zwischen der inneren Geberstrukturierung 3 und der äußeren Geberstrukturierung 2 bzw., falls diese Geberstrukturierungen 2, 3, wie in Figur 3 gezeichnet, unmittelbar aneinander angrenzen, mittig auf der Grenzlinie zwischen den beiden Geberstrukturierungen 2, 3 platziert.

Gegenüber dem ersten Mittensensorelement 10 ist das erste Außensensorelement 4 radial weiter außen angeordnet, während sich das erste Innensensorelement 5 radial weiter innen befindet. Bevorzugt ist der Abstand des ersten Außensensorelementes 4 von dem ersten Mittensensorelement 10 gleich dem Abstand des ersten Innensensorelementes 5 von dem ersten Mittensensorelement 10.

Aufgrund der gewählten Magnetisierung der Magnetisierungssegmente 14, 15 und deren Anordnung zu der inneren Geberstrukturierung 3 bzw. der äußeren Geberstrukturierung 2 ergibt sich somit bei der gewählten Anordnung der Sensorelemente 4, 5, 10 in der Sensiereinrichtung 11, dass die von dem ersten Außensensorelement 4 und die von dem ersten Innensensorelement 5 abgegebenen Signale bei Drehung des Reifens 9 zumindest näherungsweise einen, gegebenenfalls mit einem Offset versehenen, sinus- oder cosinusförmigen Signalverlauf aufweisen. Dabei ist das Signal des ersten Innensensorelementes 5 weiter gegenüber dem Signal des ersten Außensensorelementes 4 bei einem von dem Einfluss einer Umfangskraft freien Reifen 9 um 180° phasenverschoben. Dies ergibt sich unmittelbar aus der gewählten Anordnung der Magnetisierungssegmente 14, 15 in der erläuterten schachbrettähnlichen Form.

Die Funktion der Sensiereinrichtung 11 beruht nun einerseits auf der bekannten Tatsache, dass bei einer wirksamen Umfangskraft eine zusätzliche Phasenverschiebung des Signals des ersten Innensensorelementes 5 gegenüber dem Signal des ersten Außensensorelementes 4 auftritt, die zu dieser Umfangskraft zumindest näherungsweise proportional ist. Somit ist aus den von der Sensiereinrichtung 11 abgegebenen Signale mittels einer nicht dargestellten Auswerteinheit ein aufgrund der wirksamen Umfangskraft entstehender, zu der Umfangskraft zumindest näherungsweise proportionaler Verschiebungswinkel $\alpha$ zwischen den Geberstrukturierungen 2, 3 als Funktion der Zeit bestimmbar, aus dem sich dann die Komponente der einwirkenden Umfangskraft als Funktion der Zeit ergibt. Darüber hinaus eignet sich die Sensiereinrichtung 11 gleichzeitig auch, um eine auf den Reifen 9 als Funktion der Zeit einwirkende Aufstands- oder Normalkraft zu detektieren, da beim Einwirken einer derartigen Kraft eine radiale Verschiebung des ersten Mittensensorelementes 10 gegenüber der inneren bzw. der äußeren Geberstrukturierung 2, 3 auftritt. Im Einzelnen ändert sich das von dem ersten Mittensensorelement 10 als Funktion der Zeit abgegebene Signal bei einer entsprechenden Magnetisierung der Magnetisierungssegmente 14, 15 in radialer Richtung bevorzugt derart, dass das von dem ersten Mittensensorelement 10 abgegebene Signal zu dieser einwirkenden Aufstands- oder Normalkraft zumindest näherungsweise proportional ist.

Aufgrund der gewählten Geberstrukturierungen 2 und 3 gemäß Figur 3 lässt sich zudem die Richtung der einwirkenden Aufstands- oder Normalkraft anhand des Vorzeichens des von dem ersten Mittensensorelement 10 abgegebenen Signals ermitteln, da sich dieses Signal bei einer radial nach innen gerichteten Bewegung des ersten Mittensensorelementes 10 relativ zu den Geberstrukturierungen 2, 3 im Vorzeichen von einem Signal bei einer entsprechenden, radial nach außen gerichteten Bewegung des ersten Mittensensorelementes 10 unterscheidet.

Im Übrigen sei betont, dass die Auswertung des Signals des ersten Mittensensorelementes 10 bevorzugt unter Einbeziehung der Signale des ersten Außensensorelementes 4 und des ersten Innensensorelementes 5 erfolgt. Darüber hinaus ist die Magnetisierung der Magnetisierungssegmente 14, 15 bevorzugt derart ausgebildet, dass in dem ersten Mittensensorelement 10 ein zu der aufgrund einer angreifenden Aufstands- oder Normalkraft auftretenden radialen Verschiebung proportionales Signal auftritt. Dies kann beispielsweise dadurch geschehen, dass die Stärke der Magnetisierung der Magnetisierungssegmente 14, 15 der Geberstrukturierung 2 bzw. 3 radial nach außen linear zunimmt oder abnimmt.

Weitere Einzelheiten zu der Magnetisierung der Reifenseitenfläche 1 und mögliche alternative Ausführungen der Geberstrukturierungen 2, 3, die ebenfalls für die erfindungsgemäße Einrichtung eingesetzt werden können, sind aus DE 196 46 251 A1 bekannt. Aus dieser Schrift sind auch weitere Details zu der Funktion des Außensensorelementes 4 im Zusammenwirken mit dem Innensensorelement 5 zur Bestimmung einer wirksamen Umfangskraft bekannt.

Die Figur 4 erläutert ein zu Figur 3 alternatives Ausführungsbeispiel hinsichtlich der in der Sensiereinrichtung 11 integrierten Sensorelemente, wobei die Sensiereinrichtung 11 nunmehr sechs Sensorelemente aufweist, die in zwei Gruppen mit jeweils drei, analog zu Figur 3 angeordneten Sensorelementen aufgeteilt sind.

Im Einzelnen sind in der Sensiereinrichtung 11 gemäß Figur 4 zunächst zwei von der Achse 16 gleich weit entfernte Außensensorelemente in Form eines ersten Außensensorelementes 4 und eines zweiten Außensensorelementes 4' vorgesehen, die in einem ersten Abstand $d_1$ voneinander angeordnet sind. Darüber hinaus weist die Sensiereinrichtung 11 zwei von der Achse 16 gleich weit entfernte Mittelsensorelemente in Form eines ersten Mittensensorelementes 10 und eines zweiten Mittensensorelementes 10' auf, die in einem zweiten Abstand $d_2$ voneinander angeordnet sind. Schließlich enthält die Sensiereinrichtung 11 auch zwei Innensensorelemente in Form eines ersten Innensensorelementes 5 und eines zweiten Innensensorelementes 5', die in einem dritten Abstand $d_3$ voneinander angeordnet sind. Die Abstände der Sensorelemente $d_1$, $d_2$ und $d_3$ und die äußere und die innere Geberstrukturierung 2, 3 sind in Figur 4 zudem derart aufeinander abgestimmt, dass zu dem Zeitpunkt, zu dem das erste Außensensorelement 4 und das erste Innensensorelement 5 ein Signalmaximum bei einer Drehung des Reifens 9 detektieren, das zweite Außensensorelement 4' und das zweite Innensensorelement 5' zumindest näherungsweise ein Signalminimum detektieren. Dazu ist das erste Außensensorelement 4, das erste Mittensensorelement 10 und das erste Innensensorelement 5 sowie das zweite Außensensorelement 4', das zweite Mittensensorelement 10' und das zweite Innensensorelement 5' jeweils auf einem senkrecht zu der Achsrichtung 12 verlaufenden, von der Achse 16 ausgehenden Strahl angeordnet. Aufgrund der gewählten Abstände $d_1$, $d_2$ und $d_3$ der einzelnen Sensorelementpaare sind die von dem ersten Außensensorelement 4, dem ersten Mittensensorelement 10 und dem ersten Innensensorelement 5 abgegebenen Signale somit weiter gegenüber den von dem zweiten Außensensorelement 4', dem zweiten Mittensensorelement 10' und dem zweiten Innensensorelement 5' abgegebenen Signale jeweils um 90° phasenverschoben. Diese Phasenverschiebung ergibt sich unmittelbar aufgrund der sinusförmigen Modulation der Magnetisierung in den Magnetisierungssegmenten 14, 15.

Die Abstände $d_1$, $d_2$ und $d_3$ ergeben sich weiter aus der folgenden Formel, in der vorausgesetzt wird, dass die Reifenseitenfläche 1 in n unmittelbar benachbarte, gleichartig ausgebildete, strahlenförmig von dem Reifenmittelpunkt 13 ausgehende Magnetisierungssegmente 14, 15 unterteilt ist. Bei einem Radialabstand $r_3$

des ersten und des zweiten Innensensorelementes 5, 5' von der Achse 16 ergibt sich als Abstand $d_3$ der Innensensorelemente 5, 5' bei einer vorgegebenen Sollphasenverschiebung von 90° dann:

$$d_3 = \frac{\pi\, r_3}{4\, n}$$

Die Abstände $d_2$ und $d_1$ sind dann analog zu berechnen, wobei in der obigen Formel jeweils anstelle des Radialabstandes $r_3$ der Radialabstand $r_2$ bzw. der Radialabstand $r_1$ der Mittensensorelemente 10, 10' bzw. der Außensensorelemente 4, 4' von der Achse 16 einzusetzen ist.

Bei der Berechnung der Abstände der Sensorelemente gemäß der vorstehenden Formel wurde weiter vernachlässigt, dass damit eigentlich die Bogenlänge des zugehörigen Kreissegmentes berechnet wird. Diese Bogenlänge ist bei den für die Praxis relevanten Parametern jedoch näherungsweise gleich dem Abstand der entsprechenden Sensorelemente. Andererseits ist es für einen Fachmann natürlich ohne weiteres möglich, diese Näherung bei Bedarf zu vermeiden, indem er, ausgehend von der vorstehenden Formel, aus der damit eigentlich berechneten Bogenlänge des zugehörigen Kreissegmentes die Länge der jeweiligen zugeordneten Kreissehne berechnet, die dann genau dem Abstand $d_1$, $d_2$ bzw. $d_3$ der jeweiligen Sensorelemente entspricht.

Nimmt man im erläuterten Beispiel als Radialabstand $r_3$ beispielsweise 0,25 m an und ist die Anzahl der insgesamt über die Reifenseitenfläche 1 verteilten Magnetisierungssegmente 14 bzw. 15 die der äußeren Geberstrukturierung 2 bzw. der inneren Geberstrukturierung 3 zugeordnet sind jeweils 16, so ergibt sich ein Abstand $d_3$ von beispielsweise 24,5 mm.

Durch die gemäß Figur 4 erläuterte Anordnung der in der Sensiereinrichtung 11 integrierten Sensorelemente 4, 4', 5, 5', 10, 10' ist gewährleistet, dass die Außensensorelemente 4, 4' und die Innensensorelemente 5, 5' das durch die Magnetisierung der Reifeninnenseitenfläche 1 erzeugte Magnetfeld jeweils gegeneinander um 90° phasenverschoben detektieren.

Die weitere Auswertung der von den einzelnen Sensorelementen erzeugten, und an die Sensiereinrichtung 11 abgegebenen Signale erfolgt dann mittels einer an sich bekannten Auswerteeinheit bzw. Steuereinheit, die mit der Sensiereinrichtung 11 in Verbindung steht.

In den vorstehend erläuterten Beispielen ist die Geberstrukturierung 2 bzw. 3 in Form von Magnetisierungssegmenten 14, 15 realisiert, deren Magnetfeld mittels Hall-Sensoren als Sensorelemente 4, 4', 5, 5', 10, 10' ausgewertet wird. Es ist jedoch offensichtlich, dass anstelle eines Magnetfeldes auch andere physikalische Größen eingesetzt werden können. Im Übrigen ist klar, dass die erreichbare Messgenauigkeit unter anderem von der Anzahl der Magnetisierungssegmente 14, 15 abhängig ist. Typischerweise werden 10 bis 100 Magnetisierungssegmente 14, 15 einer Geberstrukturierung 2, 3 zugeordnet und damit über die Reifenseitenfläche 1 verteilt.

Hinsichtlich weiterer bekannter Details der erläuterten Ausführungsbeispiele sei auf DE 44 35160 A1 und DE 196 46 251 A1 verwiesen.

Abschließend sei betont, dass es ohne Weiteres möglich ist, wie aus DE 44 35 160 A1 bereits bekannt, zusätzlich auch die Amplitude des Messsignals mindestens eines der Sensorelemente 4, 4', 5, 5', 10, 10' als Funktion der Zeit auszuwerten, da diese Amplitude bekanntermaßen proportional zu einer in y-Richtung wirkenden Querkraft ist. Wenn man diese Auswertung zusätzlich vornimmt erhält man eine vollständige Information der als Funktion der Zeit auf den Reifen 9 in die Richtungen x, y und z einwirkenden Kräfte.

**Patentansprüche**

1. Einrichtung zur Ermittlung einer einer wirksamen Kraft proportionalen Größe an einem Reifen (9) eines Fahrzeugrades, wobei das Fahrzeugrad mindestens eine in einer Reifenseitenfläche (1) des Reifens (9) zumindest bereichsweise angeordnete äußere Geberstrukturierung (2) und zumindest bereichsweise mindestens eine weitere, gegenüber der ersten Geberstrukturierung (2) radial weiter innen liegende innere Geberstrukturierung (3) aufweist, und wobei weiter mindestens eine fahrzeugfest angeordnete, mit den Geberstrukturierungen (2, 3) zusammenwirkende Sensiereinrichtung (11) zur Abgabe von Signalen vorgesehen ist, die mindestens ein mit der äußeren Geberstrukturierung (2) zusammenwirkendes Außensensorelement (4, 4') und mindestens ein gegenüber dem Außensensorelement (4, 4') radial weiter innen liegendes, mit der inneren Geberstrukturierung (3) zusammenwirkendes Innensensorelement (5, 5') aufweist, wobei die äußere und die innere Geberstrukturierung (2, 3) und die Anordnung der Sensorelemente (4, 4', 5, 5') derart aufeinander abgestimmt sind, dass mit der Sensiereinrichtung (11) eine auf den Reifen (9) einwirkende Umfangskraft detektierbar ist, **dadurch gekennzeichnet, dass** die Sensiereinrichtung (11) mindestens ein gegenüber dem Außensensorelement (4, 4') radial weiter innen liegendes und gegenüber dem Innensensorelement (5, 5') radial weiter außen liegendes Mittensensorelement (10, 10') aufweist, so dass mit dem Mittensensorelement (10, 10') eine auf den Reifen (9) einwirkende Aufstands- oder Normalkraft detektierbar ist, indem sich bei einer radialen Verschiebung das Mittensensorelementes (10, 10') zu einer der Geberstrukturierungen (2, 3) das vom Mittensensorelement (10, 10') abgegebene Signal ändert.

2. Einrichtung nach Anspruch 1, **dadurch gekennzeichnet, dass** die äußere und die innere Geberstrukturierung (2, 3) eine strukturierte Magnetisierung zumindest eines Bereiches der Reifenseitenfläche (1) ist.

3. Einrichtung nach Anspruch 1 oder 2, **dadurch gekennzeichnet, dass** die äußere und die innere Geberstrukturierung (2, 3) zumindest bereichsweise eine strahlenförmige oder segmentförmige, zum Reifenmittelpunkt (13) ausgerichtete Strukturierung der Reifenseitenfläche (1) ist.

4. Einrichtung nach mindestens einem der vorangehenden Ansprüche, **dadurch gekennzeichnet, dass** die äußere und die innere Geberstrukturierung (2, 3) jeweils eine auf der Reifenseitenfläche (1) umlaufende periodische Anordnung von Magnetisierungssegmenten (14, 15) ist.

5. Einrichtung nach Anspruch 4, **dadurch gekennzeichnet, dass** die Magnetisierungssegmente (14, 15) derart magnetisiert sind, dass zumindest die von dem Außensensorelement (4, 4') und die von dem Innensensorelement (5, 5') abgegebenen Signale zumindest näherungsweise einen sinus- oder cosinusförmigen Signalverlauf oder einen mit einem Offset versehenen sinus- oder cosinusförmigen Signalverlauf aufweisen.

6. Einrichtung nach einem der Ansprüche 4 bis 5, **dadurch gekennzeichnet, dass** die äußere und die innere Geberstrukturierung (2, 3) jeweils eine umlaufende periodische Anordnung von aneinander angrenzenden Magnetisierungssegmenten (14, 15) ist, wobei die Magnetisierung der Magnetisierungssegmente (14, 15) jeweils derart ausgebildet ist, dass sie jeweils entlang zumindest einer konzentrisch zu dem Reifenmittelpunkt (13) auf der Reifenseitenfläche (1) im Bereich der inneren Geberstrukturierung (3) und entlang zumindest einer konzentrisch zu dem Reifenmittelpunkt (13) auf der Reifenseitenfläche (1) im Bereich der äußeren Geberstrukturierung (2) verlaufenden Kreislinie zumindest näherungsweise sinusförmig variiert.

7. Einrichtung nach einem der Ansprüche 4 bis 6 **dadurch gekennzeichnet, dass** die innere und die äußre Geberstrukturierung (2, 3) jeweils eine umlaufende periodische Anordnung von aneinander angrenzenden Magnetisierungssegmenten (14, 15) ist, wobei die Magnetisierung der Magnetisierungssegmente (14, 15) der inneren und der äußeren Geberstrukturierung (2, 3) derart ausgebildet ist, dass die von dem Außensensorelement (4, 4') und dem Innensensorelement (5, 5') abgegebenen Signale bei einem von dem Einfluss einer Umfangskraft oder einer Aufstands- oder Normalkraft freien Reifen (9) eine Phasenverschiebung von 180° aufweisen.

8. Einrichtung nach einem der Ansprüche 4 bis 7, **dadurch gekennzeichnet, dass**
die Geberstrukturierungen (2, 3) jeweils eine Vielzahl von Magnetisierungssegmenten (14, 15) aufweisen.

9. Einrichtung nach einem der Ansprüche 4 bis 8, **dadurch gekennzeichnet, dass**
die Reifenseitenfläche (1) zumindest bereichsweise mit hinsichtlich der Richtung der Magnetisierung benachbarter Magnetisierungssegmente (14, 15) schachbrettähnlich angeordneten umlaufenden Magnetisierungssegmenten (14, 15) versehen ist.

10. Einrichtung nach mindestens einem der vorangehenden Ansprüche,
**dadurch gekennzeichnet, dass**
das Außensensorelement (4), das Mittensensorelement (10) und das Innensensorelement (5) auf einem senkrecht zu der Achsrichtung (12) verlaufenden, von der Achse (16) ausgehenden Strahl angeordnet sind.

11. Einrichtung nach Anspruch 10,
**dadurch gekennzeichnet, dass**
der senkrecht zu der Achsrichtung (12) verlaufende Strahl parallel zu der an dem Reifen (9) angreifenden Aufstands- oder Normalkraft verläuft.

12. Einrichtung nach mindestens einem der vorangehenden Ansprüche,
**dadurch gekennzeichnet, dass**
das Mittensensorelement (10, 10') derart angeordnet ist, dass bei einem von dem Einfluss einer Aufstands- oder Normalkraft freien Reifen (9) das effektive Magnetfeld am Ort des Mittensensorelementes (10, 10') zumindest näherungsweise null ist und/oder dass das Mittensensorelement (10, 10') derart angeordnet ist, dass bei einem von dem Einfluss einer Aufstands- oder Normalkraft freien Reifen (9) das von dem Mittensensorelement (10, 10') als Funktion der Zeit bei Drehung des Reifens (9) detektierte Signal null oder zeitlich zumindest näherungsweise konstant ist.

13. Einrichtung nach mindestens einem der vorangehenden Ansprüche,
**dadurch gekennzeichnet, dass**
eine aufgrund einer an dem Reifen (9) angreifenden Aufstands- oder Normalkraft auftretende radiale Verschiebung des Mittensensorelementes (10, 10') gegenüber der inneren und der äußeren Geberstrukturierung (2, 3) zu dieser Kraft zumindest näherungsweise proportional ist.

14. Einrichtung nach mindestens einem der vorangehenden Ansprüche,
**dadurch gekennzeichnet, dass**
eine aufgrund einer an dem Reifen (9) angreifenden Umfangskraft auftretende Phasenverschiebung des Signals des Außensensorelementes (4, 4') bezogen auf das Signal des Innensensorelementes (5, 5') zu der Umfangskraft zumindest naeherungsweise proportional ist.

15. Einrichtung nach mindestens einem der vorangehenden Ansprüche,
**dadurch gekennzeichnet, dass**
aus den von der Sensiereinrichtung (11) abgegebenen Signalen mittels einer Auswerteeinheit ein aufgrund der wirksamen Umfangskraft entstehender, zu der Umfangskraft zumindest näherungsweise proportionaler Verschiebungswinkel ($\alpha$) zwischen den Geberstrukturierungen (2, 3) als Funktion der Zeit bestimmbar ist.

16. Einrichtung nach mindestens einem der vorangehenden Ansprüche, **dadurch gekennzeichnet, dass** zwei von der Achse (16) gleich weit entfernte Außensensorelemente (4, 4') in Form eines ersten Außensensorelementes (4) und eines zweiten Außensensorelementes (4') mit einem ersten Abstand ($d_1$), zwei von der Achse (16) gleich weit entfernte Mittensensorlemente (10, 10') in Form eines ersten Mittensensorelementes (10) und eines zweiten Mittensensorelementes (10') mit einem zweiten Abstand ($d_2$), und zwei von der Achse (16) gleich weit entfernte Innensensorelemente (5, 5') in Form eines ersten Innensensorelmentes (5) und eines zweiten Innensensorelmentes (5') mit einem dritten Abstand ($d_3$) vorgesehen sind, wobei der erste Abstand ($d_1$) und der dritte Abstand ($d_3$) und die innere und die äußere Geberstrukturierung (2, - 3) derart aufeinander abgestimmt sind, dass zu dem Zeitpunkt, zu dem das erste Außensensorelement (4) und das erste Innensensorelement (5) ein Signalmaximum detektieren, das zweite Außensensorelement (4') und das zweite Innensensorelement (5') zumindest näherungsweise ein Signalminimum detektieren.

17. Einrichtung nach Anspruch 16, **dadurch gekennzeichnet, dass** das erste Außensensorelement (4), das erste Mittensensorelement (10) und das erste Innensensorelement (5) sowie das zweite Außensensorelement (4'), das zweite Mittensensorelement (10') und das zweite Innensensorelement (5') jeweils auf einem senkrecht zu der Achsrichtung (12) verlaufenden, von der Achse (16) ausgehenden Strahl angeordnet sind.

18. Einrichtung nach Anspruch 16 oder 17, **dadurch ge-**

**kennzeichnet, dass** die von dem ersten Außensorelement (4), dem ersten Mittensorelement (10) und dem ersten Innensorelement (5) abgegebenen Signale gegenüber den von dem zweiten Außensorelement (4'), dem zweiten Mittensorelement (10') und dem zweiten Innensorelement (5') abgegebenen Signalen jeweils eine Phasenverschiebung von zumindest näherungsweise 90° aufweisen.

19. Einrichtung nach mindestens einem der vorangehenden Ansprüche, **dadurch gekennzeichnet, dass** die Sensiereinrichtung (11) mit einer elektronischen Auswerteeinheit in Verbindung steht, mittels der die Signale der einzelnen Sensorelemente (4, 4', 5, 5', 10, 10') elektronisch verarbeitbar sind.

**Claims**

1. Device for determining a variable that is proportional to an effective force on a tyre (9) of a vehicle wheel, the vehicle wheel having at least one outer detector structure (2) arranged at least in regions of a tyre sidewall (1) of the tyre (9) and, at least in regions, at least one further, inner detector structure (3) which is radially further inwards with respect to the first detector structure (2), and at least one sensing device (11) which is arranged such that it is fixed to the vehicle, interacts with the detector structures (2, 3) and is intended to emit signals also being provided, which sensing device has at least one outer sensor element (4, 4') which interacts with the outer detector structure (2) and at least one inner sensor element (5, 5') which is radially further inwards with respect to the outer sensor element (4, 4') and interacts with the inner detector structure (3), the outer detector structure (2) and the inner detector structure (3) and the arrangement of the sensor elements (4, 4', 5, 5') being matched to one another in such a manner that the sensing device (11) can be used to detect a peripheral force acting on the tyre (9), **characterized in that** the sensing device (11) has at least one centre sensor element (10, 10') which is radially further inwards with respect to the outer sensor element (4, 4') and is radially further outwards with respect to the inner sensor element (5, 5'), with the result that the centre sensor element (10, 10') can be used to detect a contact or normal force acting on the tyre (9) by virtue of the signal emitted by the centre sensor element (10, 10') changing when the centre sensor element (10, 10') is radially shifted with respect to one of the detector structures (2, 3).

2. Device according to Claim 1, **characterized in that** the outer detector structure (2) and the inner detector structure (3) are a structured magnetization of at least one region of the tyre sidewall (1).

3. Device according to Claim 1 or 2, **characterized in that** the outer detector structure (2) and the inner detector structure (3) are, at least in regions, a radial or segment-shaped structure of the tyre sidewall (1), which structure is oriented with respect to the centre (13) of the tyre.

4. Device according to at least one of the preceding claims, **characterized in that** the outer detector structure (2) and the inner detector structure (3) are each a circumferential periodic arrangement of magnetization segments (14, 15) on the tyre sidewall (1).

5. Device according to Claim 4, **characterized in that** the magnetization segments (14, 15) are magnetized in such a manner that at least the signals emitted by the outer sensor element (4, 4') and the signals emitted by the inner sensor element (5, 5') at least approximately have a sinusoidal or cosinusoidal signal profile or a sinusoidal or cosinusoidal signal profile provided with an offset.

6. Device according to either of Claims 4 and 5, **characterized in that** the outer detector structure (2) and the inner detector structure (3) are each a circumferential periodic arrangement of adjoining magnetization segments (14, 15), the magnetization of the magnetization segments (14, 15) respectively being designed in such a manner that it respectively varies at least approximately in a sinusoidal manner along at least one circumference which runs concentrically with respect to the centre (13) of the tyre on the tyre sidewall (1) in the region of the inner detector structure (3) and along at least one circumference which runs concentrically with respect to the centre (13) of the tyre on the tyre sidewall (1) in the region of the outer detector structure (2).

7. Device according to one of Claims 4 to 6, **characterized in that** the inner detector structure (2) and the outer detector structure (3) are each a circumferential periodic arrangement of adjoining magnetization segments (14, 15), the magnetization of the magnetization segments (14, 15) of the inner detector structure (2) and of the outer detector structure (3) being designed in such a manner that the signals emitted by the outer sensor element (4, 4') and the inner sensor element (5, 5') have a phase shift of 180° in the case of a tyre (9) which is free from the influence of a peripheral force or a contact or normal force.

8. Device according to one of Claims 4 to 7, **characterized in that** the detector structures (2, 3) each have a multiplicity of magnetization segments (14, 15).

9. Device according to one of Claims 4 to 8, **charac-**

**terized in that** the tyre sidewall (1) is provided, at least in regions, with circumferential magnetization segments (14, 15) which are arranged like a chessboard with respect to the direction of magnetization of adjacent magnetization segments (14, 15).

10. Device according to at least one of the preceding claims, **characterized in that** the outer sensor element (4), the centre sensor element (10) and the inner sensor element (5) are arranged on a beam which runs perpendicular to the axial direction (12) and starts from the axis (16).

11. Device according to Claim 10, **characterized in that** the beam which runs perpendicular to the axial direction (12) runs parallel to the contact or normal force affecting the tyre (9).

12. Device according to at least one of the preceding claims, **characterized in that** the centre sensor element (10, 10') is arranged in such a manner that, in the case of a tyre (9) which is free from the influence of a contact or normal force, the effective magnetic field at the location of the centre sensor element (10, 10') is at least approximately zero, and/or **in that** the centre sensor element (10, 10') is arranged in such a manner that, in the case of a tyre (9) which is free from the influence of a contact or normal force, the signal detected by the centre sensor element (10, 10') as a function of the time as the tyre (9) rotates is zero or at least approximately constant over time.

13. Device according to at least one of the preceding claims, **characterized in that** a radial shift of the centre sensor element (10, 10') with respect to the inner detector structure (2) and the outer detector structure (3), which shift occurs on account of a contact or normal force affecting the tyre (9), is at least approximately proportional to this force.

14. Device according to at least one of the preceding claims, **characterized in that** a phase shift of the signal from the outer sensor element (4, 4') with respect to the signal from the inner sensor element (5, 5'), which phase shift occurs on account of a peripheral force acting on the tyre (9), is at least approximately proportional to the peripheral force.

15. Device according to at least one of the preceding claims, **characterized in that** a shift angle ($\alpha$) between the detector structures (2, 3), which angle is produced on account of the effective peripheral force and is at least approximately proportional to the peripheral force, can be determined from the signals emitted by the sensing device (11) as a function of time using an evaluation unit.

16. Device according to at least one of the preceding claims, **characterized in that** two outer sensor elements (4, 4') which are at the same distance from the axis (16) and are in the form of a first outer sensor element (4) and a second outer sensor element (4') with a first distance ($d_1$), two centre sensor elements (10, 10') which are at the same distance from the axis (16) and are in the form of a first centre sensor element (10) and a second centre sensor element (10') with a second distance ($d_2$), and two inner sensor elements (5, 5') which are at the same distance from the axis (16) and are in the form of a first inner sensor element (5) and a second inner sensor element (5') with a third distance ($d_3$) are provided, the first distance ($d_1$) and the third distance ($d_3$) and the inner detector structure (2) and the outer detector structure (3) being matched to one another in such a manner that the second outer sensor element (4') and the second inner sensor element (5') at least approximately detect a signal minimum at the time at which the first outer sensor element (4) and the first inner sensor element (5) detect a signal maximum.

17. Device according to Claim 16, **characterized in that** the first outer sensor element (4), the first centre sensor element (10) and the first inner sensor element (5) as well as the second outer sensor element (4'), the second centre sensor element (10') and the second inner sensor element (5') are each arranged on a beam which runs perpendicular to the axial direction (12) and starts from the axis (16).

18. Device according to Claim 16 or 17, **characterized in that** the signals emitted by the first outer sensor element (4), the first centre sensor element (10) and the first inner sensor element (5) each have a phase shift of at least approximately 90° with respect to the signals emitted by the second outer sensor element (4'), the second centre sensor element (10') and the second inner sensor element (5').

19. Device according to at least one of the preceding claims, **characterized in that** the sensing device (11) is connected to an electronic evaluation unit which can be used to electronically process the signals from the individual sensor elements (4, 4', 5, 5', 10, 10').

**Revendications**

1. Système de détermination d'une grandeur proportionnelle à une force agissant sur un bandage (9) d'une roue de véhicule, la roue de véhicule présentant au moins une structuration extérieure d'émetteur (2) dont au moins certaines parties sont disposées dans une surface latérale (1) du bandage (9), et dans au moins certaines parties, au moins une autre structuration intérieure d'émetteur (3) située radialement plus à l'intérieur que la première structuration d'émetteur (2),

au moins un système de détecteurs (11) fixé sur le véhicule et coopérant avec les structures d'émetteur (2, 3) pour délivrer des signaux étant prévu et présentant au moins un élément extérieur de détecteur (4, 4') qui coopère avec la structuration extérieure d'émetteur (2) et au moins un élément intérieur de détecteur (5, 5') qui coopère avec la structuration intérieure d'émetteur (3) et situé radialement plus à l'intérieur que l'élément extérieur de détecteur (4, 4'), la structuration extérieure et la structuration intérieure d'émetteur (2, 3) ainsi que l'agencement des éléments de détecteur (4, 4', 5, 5') étant accordés les uns aux autres de manière à pouvoir détecter avec le système de détecteurs (11) une force périphérique qui agit sur le bandage (9),

**caractérisé en ce que**

le système de détecteurs (11) présente au moins un élément central de détecteur (10, 10') situé radialement plus à l'intérieur que l'élément extérieur de détecteur (4, 4') et situé radialement plus à l'extérieur que l'élément intérieur de détecteur (5, 5') de telle sorte que l'élément central de détecteur (10, 10') puisse détecter une force d'appui ou normale qui agit sur le bandage (9) par le fait que le signal délivré par l'élément central de détecteur (10, 10') se modifie en cas de déplacement radial de l'élément central de détecteur (10, 10') par rapport à l'une des structurations d'émetteur (2, 3).

2. Dispositif selon la revendication 1, **caractérisé en ce que** la structuration extérieure et la structuration intérieure d'émetteur (2, 3) sont une magnétisation structurée d'au moins une partie de la surface latérale (1) du bandage.

3. Système selon les revendications 1 ou 2, **caractérisé en ce qu'**au moins dans certaines parties, la structuration extérieure et la structuration intérieure d'émetteur (2, 3) sont une structuration de la surface latérale (1) du bandage orientée vers le centre (13) du bandage et en forme de faisceau ou de segment.

4. Système selon au moins l'une des revendications précédentes, **caractérisé en ce que** la structuration extérieure et la structuration intérieure d'émetteur (2, 3) sont toutes deux un agencement périodique périphérique de segments de magnétisation (14, 15) qui entourent la surface latérale (1) du bandage.

5. Système selon la revendication 4, **caractérisé en ce que** les segments de magnétisation (14, 15) sont magnétisés de telle sorte qu'au moins les signaux délivrés par l'élément extérieur de détecteur (4, 4') et par l'élément intérieur de détecteur (5, 5') présentent au moins approximativement une évolution sinusoïdale ou cosinusoïdale ou une évolution sinusoïdale ou cosinusoïdale avec décalage.

6. Système selon l'une des revendications 4 à 5, **caractérisé en ce que** la structuration extérieure et la structuration intérieure d'émetteur (2, 3) sont chacune un agencement périodique périphérique de segments de magnétisation (14, 15) adjacents les uns aux autres, la magnétisation des segments de magnétisation (14, 15) étant formée de telle sorte qu'elle varie au moins approximativement de manière sinusoïdale le long d'au moins une ligne circulaire qui s'étend concentriquement par rapport au centre (13) du bandage sur la surface latérale (1) du bandage dans la zone occupée par la structuration intérieure d'émetteur (3) et le long d'au moins une ligne circulaire qui s'étend concentriquement par rapport au centre (13) du bandage sur la surface latérale (1) du bandage dans la zone occupée par la structuration extérieure d'émetteur (2).

7. Dispositif selon l'une des revendications 4 à 6, **caractérisé en ce que** la structuration intérieure et la structuration extérieure d'émetteur (2, 3) sont chacune un agencement périodique de segments de magnétisation (14, 15) adjacents les uns aux autres, la magnétisation des segments de magnétisation (14, 15) de la structuration intérieure et de la structuration extérieure d'émetteur (2, 3) étant configurée de telle sorte que les signaux délivrés par l'élément extérieur de détecteur (4, 4') et l'élément intérieur de détecteur (5, 5') présentent un déphasage de 180° dans le cas d'un bandage (9) non soumis à l'action d'une force périphérique, d'une force d'appui ou d'une force normale.

8. Dispositif selon l'une des revendications 4 à 7, **caractérisé en ce que** les structurations d'émetteur (2, 3) présentent toutes plusieurs segments de magnétisation (14, 15).

9. Dispositif selon l'une des revendications 4 à 8, **caractérisé en ce qu'**au moins dans certaines parties, la surface latérale (1) du bandage est dotée de segments de magnétisation (14, 15) périphériques disposés en damier par rapport à la direction de magnétisation des segments de magnétisation (14, 15) voisins.

10. Système selon au moins l'une des revendications précédentes, **caractérisé en ce que** l'élément extérieur de détecteur (4), l'élément central de détecteur (10) et l'élément intérieur de détecteur (5) sont disposés sur un rayon partant de l'axe (16) et perpendiculaire à la direction (12) de l'axe.

11. Système selon la revendication 10, **caractérisé en ce que** le rayon qui s'étend perpendiculairement à la direction (12) de l'axe s'étend parallèlement à la force d'appui ou normale qui agit sur le bandage (9).

**12.** Système selon au moins l'une des revendications précédentes, **caractérisé en ce que** l'élément central de détecteur (10, 10') est disposé de telle sorte que lorsque le bandage (9) ne subit pas l'action d'une force d'appui ou normale, le champ magnétique effectif à l'emplacement de l'élément central de détecteur (10, 10') est au moins approximativement nul et/ou **en ce que** l'élément central de détecteur (10, 10') est disposé de telle sorte que lorsque le bandage (9) ne subit pas l'action d'une force d'appui ou normale, le signal détecté par l'élément central de détecteur (10, 10') en fonction du temps lorsque le bandage (9) tourne est nul ou au moins approximativement constant dans le temps.

**13.** Dispositif selon au moins l'une des revendications précédentes, **caractérisé en ce que** le décalage radial de l'élément central de détecteur (10, 10') par rapport à la structuration intérieure et la structuration extérieure d'émetteur (2, 3) dû à l'action d'une force d'appui ou normale agissant sur le bandage (9) est au moins approximativement proportionnel à cette force.

**14.** Système selon au moins l'une des revendications précédentes, **caractérisé en ce que** le déphasage du signal de l'élément extérieur de détecteur (4, 4') par rapport au signal de l'élément intérieur de détecteur (5, 5') au cas où une force périphérique est exercée sur le bandage (9) est au moins approximativement proportionnel à la force périphérique.

**15.** Système selon au moins l'une des revendications précédentes, **caractérisé en ce qu'**à partir des signaux délivrés par le système de détecteurs (11), un angle de décalage ($\alpha$) entre les structurations d'émetteur (2, 3) en fonction du temps, au moins approximativement proportionnel à la force périphérique et apparaissant suite à l'action de la force périphérique, peut être déterminé au moyen d'une unité d'évaluation.

**16.** Système selon au moins l'une des revendications précédentes, **caractérisé en ce qu'**il présente deux éléments extérieur de détecteur (4, 4') équidistants de l'axe (16) et présentant la forme d'un premier élément extérieur de détecteur (4) et d'un deuxième élément extérieur de détecteur (4') séparés d'une première distance ($d_1$), deux éléments centraux de détecteur (10, 10') équidistants de l'axe (16), présentant la forme d'un premier élément central de détecteur (10) et d'un deuxième élément central de détecteur (10') séparés d'une deuxième distance ($d_2$), et deux éléments intérieurs de détecteur (5, 5') équidistants de l'axe (16), présentant la forme d'un premier élément intérieur de détecteur (5) et d'un deuxième élément intérieur de détecteur (5') séparés d'une troisième distance ($d_3$), la première distance ($d_1$) et la troisième distance ($d_3$) ainsi que la structuration intérieure et la structuration extérieure d'émetteur (2, 3) étant accordées les unes aux autres de telle sorte qu'à l'instant auquel le premier élément extérieur de détecteur (4) et le premier élément intérieur de détecteur (5) détectent un maximum dans le signal, le deuxième élément extérieur de détecteur (4') et le deuxième élément intérieur de détecteur (5') détectent au moins approximativement un minimum dans le signal.

**17.** Système selon la revendication 16, **caractérisé en ce que** le premier élément extérieur de détecteur (4), le premier élément central de détecteur (10) et le premier élément intérieur de détecteur (5) ainsi que le deuxième élément extérieur de détecteur (4'), le deuxième élément central de détecteur (10') et le deuxième élément intérieur de détecteur (5') s'étendent tous sur un rayon partant de l'axe (16) et perpendiculaire à la direction (12) de l'axe.

**18.** Système selon les revendications 16 ou 17, **caractérisé en ce que** les signaux délivrés par le premier élément extérieur de détecteur (4), le premier élément central de détecteur (10) et le premier élément intérieur de détecteur (5) présentent tous un déphasage d'au moins environ 90° par rapport aux signaux délivrés par le deuxième élément extérieur de détecteur (4'), le deuxième élément central de détecteur (10') et le deuxième élément intérieur de détecteur (5').

**19.** Système selon au moins l'une des revendications précédentes, **caractérisé en ce que** le système de détecteurs (11) communique avec une unité électronique d'évaluation qui permet de traiter électroniquement les signaux des différents éléments de détecteur (4, 4', 5, 5', 10, 10').

EP 1 124 109 B1

Fig. 1

12

**Fig. 2**

**Fig. 3**

**Fig. 4**

**EP 1 124 109 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4435161 A1
- DE 19646251 A1
- DE 4435160 A1